# EUROPÄISCHE PATENTSCHRIFT

(11) **EP 1 867 587 B1**
(45) Veröffentlichungstag und Bekanntmachung des Hinweises auf die Patenterteilung: **16.06.2010**
(21) Anmeldenummer: 07017576.5
(22) Anmeldetag: 09.03.2005
(51) Int. Cl.: B65G 1/137

(54) **Vorrichtung und Verfahren zur Bereitstellung von stapelbaren Waren**
Device and method for providing stackable goods
Dispositif et procédé de préparation de biens empilables

(30) Priorität: 18.03.2004 AT 4822004
(43) Veröffentlichungstag der Anmeldung: 19.12.2007
(62) Teilanmeldung aus: 05714164.0
(73) Patentinhaber: TGW Mechanics GmbH, 4600 Wels (AT); Klug GmbH Integrierte Systeme, 92552 Teunz (DE)
(72) Erfinder: Hansl, Rudolf, 4020 Linz (AT); Klug, Dieter, 93492 Treffelstein (DE)
(74) Vertreter: Ofner, Clemens

(56) Entgegenhaltungen:
- DE-A1- 2 736 197
- DE-A1- 19 745 813

## Beschreibung

Die Erfindung betrifft ein Verfahren zur Bereitstellung von stapelbaren Waren in schachtartigen Vorratsmagazinen wenigstens einer Speichereinrichtung und Überwachung eines Istbestands an Waren in den Vorratsmagazinen mittels einer Erfassungseinrichtung, wie in den Oberbegriffen der Ansprüche 1 und 2 beschrieben.

Aus der US 5,755,552 A ist eine Vorrichtung zur Bereitstellung von stapelbaren Waren bekannt, die beidseits zu einer Fördereinrichtung angeordnete Speichereinrichtungen umfasst. Die Speichereinrichtungen sind durch in Längsrichtung der Fördereinrichtung hintereinander angeordnete, schachtartige Vorratsmagazine zur Aufnahme unterschiedlicher Waren ausgebildet und sind am unteren Ende eines jeden Vorratsmagazins, von einem Rechnersystem gesteuerte Abgabevorrichtungen vorgesehen. Die Vorratsmagazine sind jeweils mit einem ortsfesten Sensor zur Überwachung eines Füllstandes ausgestattet, der ein Signal an eine Bedieneinheit abgibt, sobald der Stapel einen Mindestfüllstand unterschreitet, woraufhin eine Bedienperson das Vorratsmagazin mit Waren manuell beschickt.

Die Kommissionierung der Waren kann auf zwei unterschiedliche Arten erfolgen. Nach einer ersten Ausführung, wie sie in der DE 33 48 171 C beschrieben ist, werden auf dem Förderband abgestellte, zu kommissionierende Warenträger, insbesondere Transportbehälter, an einer Vielzahl von beidseitig des Bandförderers angeordneten Vorratsmagazinen vorbeitransportiert und während des Vorbeitransportes an den Vorratsmagazinen nach Vorgabe eines Auftrags mit unterschiedlichen Waren beladen.

Nach einer anderen Ausführung, wie sie in der DE 42 25 041 A beschrieben ist, werden im Gegensatz dazu keine zu kommissionierende Warenträger eingesetzt, sondern es werden die einzelnen Waren unmittelbar auf das unterhalb von Vorratsmagazinen einer Speichereinrichtung vorbeilaufende Förderband zu einem Auftrag zusammengefasst, abgelegt. Die einzelnen Aufträge werden auf ein am Abgabeende des ersten Förderbandes vorbeiführendes, zweites Förderband aufgegeben und von dort in auftragsgebundene Warenträger abgeschoben.

Auch ist es vorgesehen, dass die einzelnen Vorratsmagazine automatisch abfragbare Füllstandsanzeigen aufweisen, sodass dem Bedienpersonal der Anlage ein Signal gegeben werden kann, welches Vorratsmagazin wieder nachgefüllt werden muss. Dazu wird ein Schalter oder eine Lichtschranke an jedem Vorratsmagazin angeordnet, der ein Signal an eine Bedieneinheit abgibt, sobald der Stapel einen Mindestfüllstand unterschreitet. Das Rechnersystem, welches bei jeder Abgabe einer Ware mitzählt, kann dann einen Abgleich zwischen der ihr bekannten Zählung und der Höhe des verbleibenden Stapels durchführen.

Eine andere Ausführung einer Füllstandsanzeige ist aus der DE 35 33 382 A1 bekannt, bei der am oberen und unteren Ende jedes Vorratsmagazins eine Zähleinrichtung für die in das Vorratsmagazin eingegeben Waren und für die vom Vorratsmagazin abgegeben Waren angeordnet ist. Mit diesen Zähleinrichtungen zählt man die jeweils zugegebenen bzw. abgegebenen Waren und das Rechnersystem kennt dann den Istbestand, daher die Anzahl an Waren im Vorratsmagazin. Über die Bedieneinheit kann nun angezeigt werden, ob in dem betreffenden Vorratsmagazin noch ein ausreichender Vorrat an Waren vorhanden ist oder ob die Gefahr besteht, dass diese Waren in Kürze alle abgegeben sind, sodass die Waren nachgefüllt werden müssen.

Da diese bekannten Kommissionieranlagen oftmals bis zu mehrere Hunderte Vorratsmagazine umfassen können, ist, um den Füllstand in einem jeden Vorratsmagazin zuverlässig überwachen zu können, ein hoher schaltungstechnischer Aufwand zwangsweise erforderlich.

Der weitaus größere Nachteil der bekannten Füllstandsüberwachungssysteme besteht aber darin, dass die Bedienperson immer nur jene Vorratsmagazine auffüllt, an denen gerade eine Bedarfsmeldung zum Nachfüllen der Vorratsmagazine in Form eines Alarms ausgegeben wird, wobei der Bedienperson zu diesem Zeitpunkt nicht bekannt ist, welche Vorratsmagazine unbedingt nachzufüllen sind. Dadurch kann nicht sichergestellt werden, dass die Bedienperson vorrangig (prioritätsbezogen) jene Vorratsmagazine auffüllt, in denen ein ausreichender Bestand an zu kommissionierenden Waren enthalten sein muss, um einen Auftrag oder nachfolgende Aufträge korrekt erfüllen zu können.

Weiters ist aus der DE 27 36 197 A1 ein elektronisch gesteuerter Kommissionierautomat bekannt, der nebeneinander angeordnete schachtartige Vorratsmagazine und zur Überwachung des Istbestands an Waren an den Vorratsmagazinen angeordnete ortsfeste Erfassungseinrichtungen und Zählautomaten sowie Abgabevorrichtungen zur Ausgabe von Artikeln zu einem Kommissionierauftrag umfasst. Die Beschickung der Vorratsmagazine erfolgt vorzugsweise automatisiert durch ein oberhalb der Vorratsmagazine angeordnetes Fördersystem. Der Istbestand an Waren wird mit einem Sollbestand abgeglichen. Der Sollbestand erfasst dabei die Anzahl der Waren im gesamten Kommissionierautomat. Unterschreitet der Istbestand an Waren den Sollbestand der für einen eingegebenen Auftrag benötigten Waren, werden über das Fördersystem Waren angefördert und zumindest ein Vorratsmagazin vollständig ausgefüllt.

Schließlich ist aus der DE 197 45 813 A1 eine Vorrichtung und ein Verfahren zur Bestimmung des Füllstandes von Waren in einem Vorratsmagazin eines Verkaufsautomaten bekannt, wo im Vorratsmagazin eine Messskala, insbesondere ein Barcode, angeordnet ist. Die Messskala ist durch die Waren bis zu einem aktuellen Füllstand verdeckt und der dem aktuellen Füllstand entsprechende Lesebereich der Messskala, ist mit einem opto-elektronischen Lesegerät, insbesondere einem Barcode-Lesegerät, abtastbar. Das Lesegerät ordnet die individuellen Abmessungen einer Ware einem Vorratsmagazin zu, wodurch aus der Höhe des Füllstandes der Istbestand an Waren im Vorratsmagazin berechenbar ist.

Aufgabe der Erfindung ist es ein Verfahren zur Bereitstellung von stapelbaren Waren zu schaffen, bei dem mit geringem Steuerungsaufwand der Istbestand an Waren in Vorratsmagazinen zuverlässig ermittelt werden kann und eine koordinierte Beschickung der Vorratsmagazine mit Waren möglich ist.

Die Aufgabe der Erfindung durch die Maßnahmen im Kennzeichenteil des Anspruches 1 gelöst. Der wesentliche Vorteil, der sich daraus ergibt ist, dass eine Bedarfsmeldung an die Bedienperson nur dann abgegeben wird, wenn der Istbestand an Waren eines Vorratsmagazins zu gering ist und deshalb ein erfasster Auftrag nicht ordnungsgemäß erfüllt werden kann. Mit anderen Worten, wird vorerst vom Rechnersystem überprüft, welche Anzahl (Sollbedarf) von Waren für diesen erfassten Auftrag benötigt wird und verglichen, ob für die Abarbeitung dieses Auftrags das Vorratsmagazin ausreichend befüllt ist. Kann dieser Auftrag nicht erfüllt werden, wird eine Bedarfsmeldung an die Bedienperson abgegeben. Dies geschieht vor oder während der Abarbeitung dieses Auftrages und noch bevor das Vorratsmagazin vollständig geleert wurde, womit ein Stillstand der Vorrichtung ausgeschlossen werden kann. Werden für diesen Auftrag noch ausreichend Waren im Vorratsmagazin bereitgestellt, wird keine Bedarfsmeldung ausgegeben. Dies kann aber bedeuten, dass im Vorratsmagazin nur noch wenige Waren enthalten sind, der Istbestand an Waren aber dennoch ausreichend ist und der Auftrag erfüllt werden kann. Erst nachdem ein weiterer Auftrag zur gleichen Ware eingeht und der Istbestand an Waren nicht ausreicht, wird eine Bedarfsmeldung ausgegeben. Demnach erhält die Bedienperson nur dann eine Bedarfsmeldung, wenn tatsächlich ein Beschickungsvorgang vorzunehmen ist und nicht, wie aus dem Stand der Technik bekannt, sobald eine Mindestfüllmenge unterschritten wird, unabhängig davon, ob überhaupt noch weitere Waren benötigt werden, um diesen und gegebenenfalls einen nachfolgenden Auftrag erledigen zu können. Diese Verknüpfung des ermittelten Istbestands im Vorratsmagazin mit dem Auftrag, führt dazu, dass die Anzahl der Bedarfsmeldungen an die Bedienperson minimal ist und die Bedienperson entlastet wird. Die Bedarfsmeldung kann auch Informationen enthalten, beispielsweise welche Anzahl von Waren für die ordnungsgemäße Erledigung des Auftrags benötigt wird und innerhalb welchem Zeitfenster eine Nachfüllung zu erfolgen hat, ohne dabei eine vollständige Entleerung dieses Vorratsmagazins zu riskieren. Dadurch steht der Bedienperson eine weitere Koordinationsmöglichkeit für die Beschickungsvorgänge offen.

Darüber hinaus wird die Aufgabe der Erfindung auch durch die Maßnahmen im Kennzeichenteil des Anspruches 2 beschrieben. Von Vorteil ist, dass anhand einer prognostizierten Absatzmenge von wenigstens einer Sorte Ware innerhalb eines bestimmten Zeitfensters, der Mengenbedarf dieser Ware erhoben wird und entsprechend diesem Bedarf die Ressourcenplanung an Bedienpersonen vorgenommen werden kann. Die Ausgangswerte für die prognostizierte Absatzmenge einer Ware, kann anhand von statistischen Auswertungen bzw. Erfahrungswerten ermittelt und in das Rechnersystem als quantitative Menge eingegeben werden.

Vorteilhafte Ausgabemöglichkeiten der Bedarfsmeldung sind im Anspruch 3 beschrieben.

Gemäß den Maßnahmen in den Ansprüchen 4 bis 6 kann auf unterschiedliche Art und Weise die Distanz zur Bestimmung des Istbestands an Waren in den Vorratsmagazinen erfasst werden.

Vorteilhafte Maßnahmen sind auch in den Ansprüchen 7 und 8 beschrieben, wodurch nun von allen Vorratsmagazinen der Füllstand ermittelt werden kann und der Bedienperson sofort bekannt ist, gegebenenfalls unabhängig von den Aufträgen, welche Vorratsmagazine vermutlich dringend aufzufüllen sind. Der Nachfüllvorgang jener Vorratsmagazine, in welchen nur mehr eine geringe Anzahl von Waren enthalten ist, kann noch vor dem Betrieb der Vorrichtung erfolgen. Sofern bereits Aufträge im Rechnersystem erfasst wurden, kann auch bereits gegengeprüft werden, ob der Tagesbedarf mit den bereitgestellten Waren in den Vorratsmagazinen ausreichend ist. Ist der Tagesbedarf abgedeckt, steht die Bedienperson für andere Arbeiten zur Verfügung. Damit kann eine Ressourcenplanung an Bedienpersonal vorgenommen werden.

Schließlich ist auch die Maßnahme nach Anspruch 9 von Vorteil, mit welcher unterschiedliche Möglichkeiten der Kommissionierung bereitgestellt sind.

Die Erfindung wird im Nachfolgenden anhand der in den Zeichnungen dargestellten Ausführungsbeispiele näher erläutert.

Es zeigen:
- Fig. 1: eine erfindungsgemäße Vorrichtung zur Bereitstellung von stapelbaren Waren, mit zu beiden Seiten einer Fördereinrichtung angeordneten Speichereinrichtungen und einer Erfassungseinrichtung, in perspektivischer Ansicht und stark vereinfachter Darstellung;
- Fig. 2: die Vorrichtung nach Fig. 1 in Seitenansicht und stark vereinfachter Darstellung;
- Fig. 3: eine Schnitterstellung der Vorrichtung nach Fig. 1 mit den gegenüberliegend angeordneten Vorratsmagazinen, den Abgabevorrichtungen, der Fördereinrichtung sowie der Erfassungseinrichtung, in stark vereinfachter Darstellung;
- Fig. 4: eine vergrößerte Darstellung eines entlang einer Führungsbahn verfahrbaren Stellwagens der Erfassungseinrichtung mit einer ersten Ausführungsform seiner Antriebsvorrichtung, in perspektivischer Ansicht, stark vereinfachter Darstellung und mit vom Stellwagen entfernter, vorderen Stirnwand;
- Fig. 5: eine weitere Ausführung der Erfassungseinrichtung mit zwei voneinander getrennt ansteuerbaren Stellwagen und einer anderen Ausführungsvariante der Antriebsvorrichtungen für die Stellwagen sowie den Speichereinrichtungen, in Draufsicht und stark vereinfachter schematischer Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

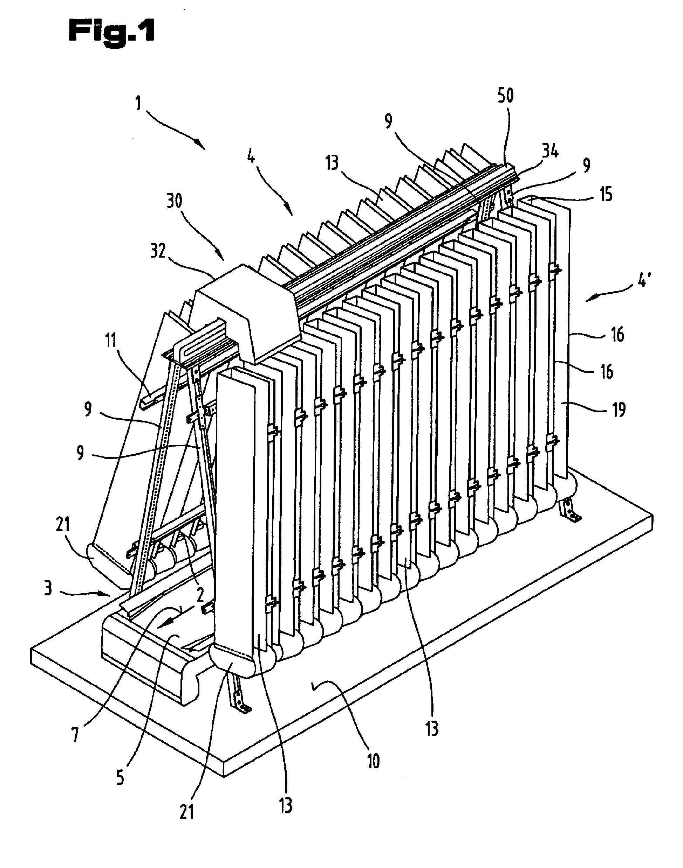

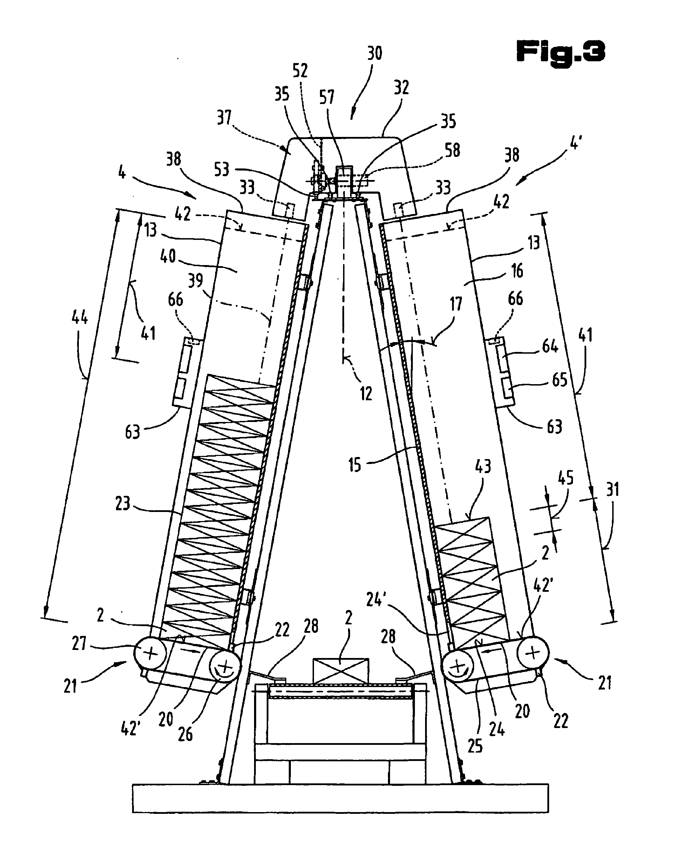

In den gemeinsam beschriebenen Fig. 1 bis 4 ist eine erfindungsgemäße, rechnergesteuerte Vorrichtung 1 zur Bereitstellung von stapelbaren Waren 2 in schachtartigen Vorratsmagazinen von Speichereinrichtungen und Überwachung von Istbeständen an Waren 2 in den Vorratsmagazinen mittels einer Erfassungseinrichtung, in unterschiedlichen Ansichten gezeigt. Die Waren 2 sind aus Gründen der besseren Übersicht nur in Fig. 3 eingetragen. Die Vorrichtung 1 weist zu beiden Seiten einer Fördereinrichtung 3, insbesondere eines Horizontalförderers, wie beispielsweise Bandförderer, angeordnete Speichereinrichtungen 4, 4' auf und bildet eine Kommissionieranlage aus. Ein Förderorgan 5, insbesondere ein Förderband, ist an einen Antrieb 6 gekuppelt und vorzugsweise ununterbrochen mit gleichmäßiger Geschwindigkeit in Förderrichtung - gemäß Pfeil 7 - angetrieben. Am Abgabeende der ersten Fördereinrichtung 3 ist beispielsweise eine querverlaufende, zweite Fördereinrichtung (nicht dargestellt) angeordnet, über welche die zu Aufträgen zusammengefassten, kommissionierten Waren 2 in Transportbehältern abtransportiert werden.

Die Vorrichtung 1 ist über einen Tragrahmen 8, insbesondere Steher 9 auf einer horizontalen Aufstandsfläche 10 abgestützt. Der Tragrahmen 8 der Vorrichtung 1 ist durch quer zur Förderrichtung - gemäß Pfeil 7 - paarweise gegenüberliegende und von unten nach oben geneigt aufeinander zulaufende Steher 9 und diese verbindende Längsträger 11 gebildet.

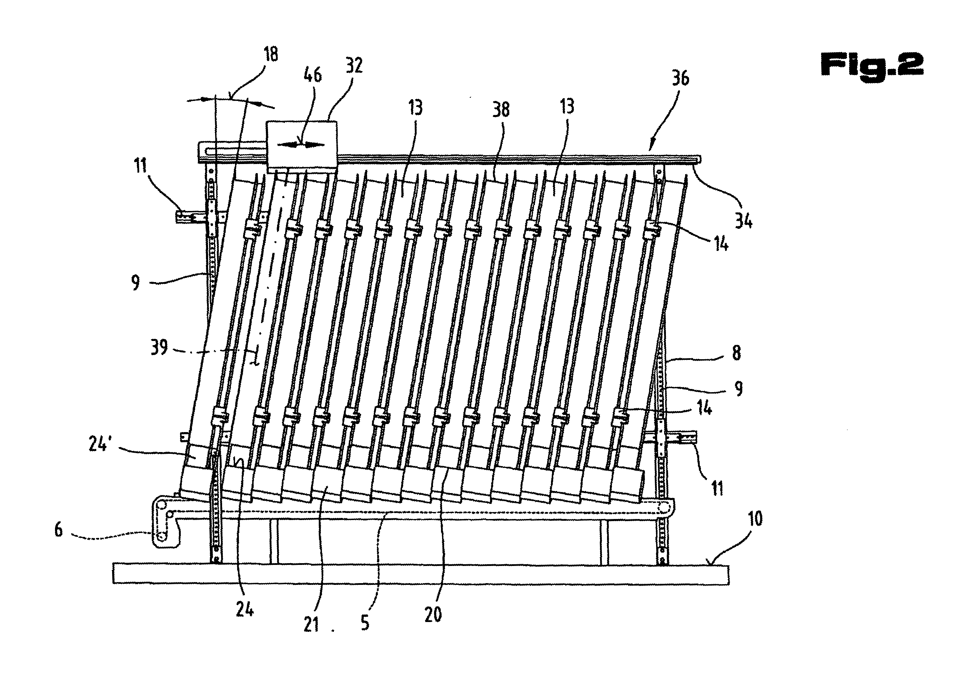

Die in Bezug auf eine vertikale Symmetrieebene 12 der Vorrichtung 1 einander gegenüberliegenden Speichereinrichtungen 4, 4' weisen jeweils in deren Längserstreckung und längs der Fördereinrichtung 3 in einer Reihe fluchtend hintereinander angeordnete, schachtartige, längliche Vorratsmagazine 13 auf, die jeweils durch ein etwa U-förmiges Führungsprofil gebildet sind. Diese Vorratsmagazine 13 sind über Befestigungsklemmen 14 miteinander verbunden. Die Speichereinrichtungen 4, 4' erstrecken sich jeweils über eine Teillänge der Fördeeinrichtung 3 und weisen bevorzugt die gleiche Länge auf. Die einzelnen Vorratsmagazine 13 der Speichereinrichtungen 4, 4' sind sowohl zum Förderband des Bandförderers hin als auch in Längsrichtung des Bandförderers derart geneigt, dass die zu kommissionierenden Waren 2 an einer Basis 15 und an einem der von der Basis 15 senkrecht vorragenden, parallelen Schenkeln 16 der Führungsprofile zumindest bereichsweise anliegen. Die Neigung der Führungsprofile zur Mitte des Förderbandes, ist durch den von der senkrechten Richtung abweichenden Neigungswinkel 17 (siehe Fig. 3) und die Neigung in Förderrichtung - gemäß Pfeil 7 - des Förderbandes, durch den von der senkrechten Richtung abweichenden Neigungswinkel 18 (siehe Fig. 2) aufgezeigt. Natürlich können die Vorratsmagazine 13 bzw. die Führungsprofile auch nur in Richtung zum Förderband des Bandförderers hin geneigt sein, stellt jedoch die doppelte Neigung, entsprechend den Neigungswinkeln 17, 18 die bevorzugte Ausführung dar.

Wie sich aus den Fig. erkennen lässt, erstreckt sich zwischen den parallelen Schenkeln 16 über die gesamte Länge der Vorratsmagazine 13 eine schlitzartige Warennachfüllöffnung 19, über die die Vorratsmagazine 13 von Hand mit Waren 2 beschickt werden können. Die zu kommissionierenden Waren 2 mit vorzugsweiser kubischer Raumform, werden dabei aufeinander gestapelt. Die Vorratsmagazine 13 reichen nur so hoch, sodass eine nicht weiters dargestellte Bedienperson auch die im Vorratsmagazin 13 höchstgelegene Nachfüllposition einfach erreichen kann. Die zu kommissionierenden Waren 2 werden in die schachtartigen Vorratsmagazine 13 von Hand eingefüllt und bilden unter ihrem Gewicht Stapel.

Wie in Fig. 3 näher dargestellt, ist im Bereich von unteren Enden 20 eines jeden Vorratsmagazins 13 eine vom Rechnersystem gesteuerte Abgabevorrichtung 21 vorgesehen. Jede Abgabevorrichtung 21 ist am Tragrahmen 8 befestigt und weist zumindest einen quer zur Längserstreckung der Fördereinrichtung 3 verschiebbaren Mitnehmer 22 auf, mit dem die jeweils unterste Ware 2 aus dem Warenstapel 23 des jeweiligen Vorratsmagazins 13 auf das mit geringem Abstand unterhalb einer von der Abgabevorrichtung 21 ausgebildeten Abgabeebene 24 angeordnete Förderorgan, insbesondere das obere Trum vom Förderband, oder, wie nicht weiters dargestellt, an einen an den Vorratsmagazinen 13 vorbeigeführten, zu kommissionierenden Warenträger, insbesondere Transportbehälter, abgegeben wird. Die auftragsgebundenen Warenträger werden mittels der Fördereinrichtung 3 transportiert.

Beispielsweise ist jede Abgabevorrichtung 21 durch einen Zugmitteltrieb gebildet, der wenigstens ein über ein Antriebsrad 26 und Umlenkrad 27 umlaufendes, endloses flexibles Zugmittel 25, wie beispielsweise Riemen, Kette und dgl., umfasst, das mit dem wenigstens einen Mitnehmer 22 versehen und von einem Antriebsmotor, insbesondere Elektromotor, in nur eine Richtung antreibbar ist. Das obere Trum des Zugmittels 25 bildet die Abgabeebene 24 aus. Das Antriebsrad 26 ist mit dem Antriebsmotor gekuppelt. Der Antriebsmotor der Abgabevorrichtungen 21 ist mit einer Steuereinheit vom Rechnersystem verbunden. Gemäß gezeigter Ausführung, ist das antreibbare Zugmittel 25 mit zwei versetzten Mitnehmern 22 versehen, sodass dann, wenn der eine Mitnehmer 22 eine Ware 2 gerade aus dem Vorratsmagazin 13 ausgeschoben hat, der nächste Mitnehmer 22 entweder in Bereitschaft steht oder aber das Herausrutschen der nächsten Ware 2 verhindert. Wird der Antriebsmotor in Gang gesetzt, so bewegt er die Mitnehmer 22 im Gegenuhrzeigersinn, sodass der rechts unten befindliche Mitnehmer 22 erst etwa nach einer halben Umdrehung an der Ware 2 angreift und diese ausschiebt. Die Ware 2 wird beim Ausschieben vorerst entlang der Abgabeebene 24 durch eine Abgabeöffnung 24' und nach deren Verlassen an einem Führungsblech 28 geführt, bis eine vordere Kante von der Ware 2 auf dem Förderorgan 5 bzw. Förderband aufliegt. Die Führungsbleche 28 sind zu beiden Seiten der Fördereinrichtung 3 und parallel zu deren Längserstreckung angeordnet sowie an den Stehern 9 befestigt. Die Abgaberichtung - gemäß eingetragenem Pfeil - verläuft quer zur Längserstreckung der Fördereinrichtung 3.

Eine andere, nicht gezeigte Ausführung besteht darin, dass der verschiebbare Mitnehmer 22 beispielsweise an einem Druckmittelzylinder, wie Pneumatik- oder Hydraulikzylinder und dgl., angeordnet ist.

Die Vorrichtung 1 umfasst zusätzlich eine Erfassungseinrichtung 30 zur Bestimmung der Füllstände 31 von Waren 2 in den Vorratsmagazinen 13 der Speichereinrichtungen 4, 4', wie in den Fig. schematisch eingetragen. Diese Erfassungseinrichtung 30 weist erfindungsgemäß einen rechnergesteuerten Stellwagen 32 und nach dieser Ausführung vorzugsweise zwei Messeinrichtungen 33 auf, die mit einer Steuereinheit vom Rechnersystem verbunden, am Stellwagen 32 angeordnet und je einer Speichereinrichtung 4, 4' zugeordnet sind. Zwischen dem Stellwagen 32 und einem Tragprofil 34 des Tragrahmens 8 ist eine Führungsvorrichtung, wie Gleit- oder Wälzführung, angeordnet, die durch eine am Stellwagen 32 angeordnete Führungsanordnung 35 und eine am Tragprofil 34 befestigte Führungsbahn 36 gebildet ist. Der Stellwagen 32 ist mit seiner Führungsanordnung 35 auf einer Führungsbahn 36 am Tragrahmen 8 der Vorrichtung 1 geführt bzw. gelagert und über eine noch näher zu beschreibende Antriebsvorrichtung 37 entlang der Führungsbahn 36 zwischen den einzelnen Vorratsmagazinen 13 im Wesentlichen horizontal verstellbar. Die Speichereinrichtungen 4,4' sind zu beiden Seiten der Führungsbahn 36 vorgesehen.

Nach dieser Ausführung ist die Führungsbahn 36 durch zwei Linearführungen 36' gebildet, die am Tragprofil 34 bevorzugt lösbar befestigt sind. Das Tragprofil 34 ist mit den geneigt aufeinander zulaufenden Stehern 9 im Bereich deren von der Aufstandsfläche 10 abgewandten, oberen Enden verbunden und erstreckt sich zwischen den mit Abstand voneinander aufgestellten Paaren von Stehern 9. Die Führungsbahn 36 bzw. die diese bildenden Linearfiihrungen 36' verlaufen mit Abstand parallel zueinander und parallel zur Längserstreckung der Fördereinrichtung 3. Die Linearführungen 36' sind beispielsweise durch Profilschienen, Schwalbenschwanzführungen, Flachführungen, Prismenführungen und dgl. gebildet, während die am Verstellwagen 32 vorgesehenen Führungsanordnungen 35 komplementär zu den Linearführungen 36' ausgebildete Gleitführungen oder Wälzführungen sind.

Die Messeinrichtungen 33 am Stellwagen 32 sind zu beiden Seiten der in Richtung der Fördereinrichtung 3 verlaufenden Führungsbahn 36 und mit geringem Abstand unmittelbar oberhalb von oberen Enden 38 der in Reihe hintereinander gereihten Vorratsmagazinen 13 der Speichereinrichtungen 4, 4' angeordnet. Demgemäß ist jede Messeinrichtung 33 quer zur Führungsbahn 36 bzw. quer zur Längserstreckung der Speichereinrichtungen 4, 4' in Richtung der jeweiligen Speichereinrichtung 4, 4' versetzt angeordnet und derart ausgerichtet, dass ein von der Messeinrichtung 33 ausgesandter Abtaststrahl 39 oder eine ausgestrahlte Abtastwelle im Wesentlichen senkrecht auf die Abgabeebene 24 der Abgabevorrichtung 21 verläuft. Verfährt der Stellwagen 32 in eine Messposition unmittelbar oberhalb eines vom U-förmigen Führungsprofil begrenzten Füllraumes 40, so trifft dann der innerhalb des Füllraumes 40 verlaufende Abtaststrahl 39 oder die Abtastwelle der Messeinrichtung 33 auf die oberste Ware 2 vom Warenstapel 23 auf.

Somit wird also über die Messeinrichtung 33 abhängig von den im Rechnersystem eingegebenen Aufträgen nur von einigen der Vorratsmagazine 13 der Speichereinrichtungen 4, 4', gegebenenfalls an einem jeden Vorratsmagazin 13 der Speichereinrichtungen 4, 4' eine Distanz 41 zwischen einer oberen Füllstandsbegrenzung 42 und einer ebenen Oberfläche 43 der jeweils von der Abgabevorrichtung 21 entferntest liegenden Ware 2 sensorisch erfasst. Nachdem die Distanz 41 erfasst wurde, kann mit dem Rechnersystem des Lagerverwaltungssystems der Füllstand 31 für die betreffenden Vorratsmagazine 13 bzw. der Istbestand an Waren 2 in den betreffenden Vorratsmagazinen 13 errechnet werden. Der Füllstand 31 errechnet sich aus der Differenz zwischen einer durch die Länge des Vorratsmagazins 13 vorgegebenen maximalen Füllhöhe 44 und der Distanz 41. Dabei ist die maximalen Füllhöhe 44 durch die obere Füllstandsbegrenzung 42, vorgegeben durch das stirnseitige, obere Ende 38 jedes Vorratsmagazins 13, und eine untere Füllstandsbegrenzung 42', vorgegeben durch das stirnseitige, untere Ende 20 jedes Vorratsmagazins 13, begrenzt. Vorzugsweise wird in einem jeden Vorratsmagazin 13 nur eine Sorte von Ware 2 untergebracht, deren jeweilige individuelle Abmessung 45 zumindest in Stapelrichtung im Rechnersystem elektronisch erfasst wird, wodurch nach der Ermittlung des Füllstandes 31 die Anzahl der Waren 2 in jedem Vorratsmagazin 13 bzw. der Istbestand an Waren 2 in jedem Vorratsmagazin 13 errechnet wird (werden).

Da nun die Messeinrichtungen 33 gemeinsam mit dem Stellwagen 32 gegenüber den Vorratsmagazinen 13 der Speichereinrichtungen 4, 4' verstellbar am Tragrahmen 8 gelagert sind, kann (können) auf einfache Weise während der Verstellbewegung des Stellwagens 32 in Längsrichtung der Speichereinrichtung 4, 4' in nur einem Vorratsmagazin 13 oder mehreren der in Verstellrichtung - gemäß Pfeil 46 - des Stellwagens 31 aufeinander folgenden Vorratsmagazine 13 der Füllstand 31 oder die Füllstände 31 sequentiell ermittelt werden, wie im Nachfolgenden noch näher beschrieben wird.

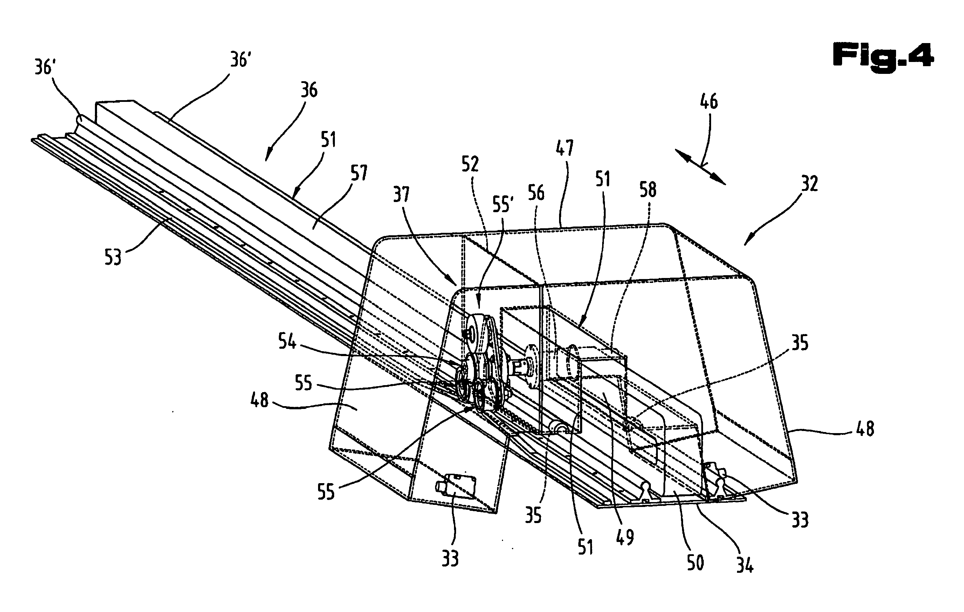

In Fig. 4 ist der positioniert verstellbare Stellwagen 32 in vergrößerter Darstellung gezeigt, der, wie bereits oben kurz beschrieben, über die Antriebsvorrichtung 37 entlang der Führungsbahn 36 im Wesentlichen horizontal verstellbar ist und ein Rahmengehäuse 47 umfasst. Aus Gründen der besseren Einsicht auf die Antriebsvorrichtung 37, ist eine vordere Stirnwand des Rahmengehäuses 47 entfernt. Das Rahmengehäuse 47 ist beispielsweise durch eine Blechbiegekonstruktion gebildet und auf der den Linearführungen 36' zugewandten Unterseite mit den oben beschriebenen Führungsanordnungen 35 versehen und weist zu den beiden Seiten der Führungsanordnungen 35 an der Unterseite des Rahmengehäuses 47 jeweils in Richtung der Speichereinrichtungen 4, 4' vorkragende Gehäuseteile 48 auf, an denen jeweils die Messeinrichtungen 33 befestigt sind. Wie weiters dargestellt, weist das Rahmengehäuse 47 zusätzlich zwischen den Gehäuseteilen 48 einen von der Unterseite in Richtung der Oberseite erstreckenden Aufnahmekanal 49 für ein Energie- und Signalübertragungssystem 50 sowie eine zwischen der Unter- und Oberseite parallel zu Innenwänden 51 verlaufende Stützwand 52 auf. Der Aufnahmekanal 49 ist seitlich durch die Innenwände 51 begrenzt. An den Stirnseiten des Rahmengehäuses 47 sind Stirnwände befestigt.

Die Antriebsvorrichtung 37 für den Stellwagen 32 ist nach dieser Ausführung durch einen Zugmitteltrieb gebildet, der ein endliches Zugmittel 53, insbesondere einen Zahnriemen, Kette und dgl., umfasst, dessen beiden freien Enden am Tragrahmen 8, insbesondere am Tragprofil 34 befestigt sind. Das Zugmittel 53 ist über ein Antriebsrad 54, insbesondere eine Zahnscheibe, geführt und an beidseitig zu diesen angeordneten Rädern 55 umgelenkt. Wie eingetragen, kann bei höheren Verstellgeschwindigkeiten vom Stellwagen 32 - etwa im Bereich von 0,2 m/s bis 0,3 m/s - ein Andrückrad 55' für das Zugmittel 53 vorgesehen werden. Das Antriebsrad 54, die Räder 55 und das Andrückrad 55' sind zueinander achsparallel angeordnet und am Rahmengehäuse 47, insbesondere an der Stützwand 52 drehbar gelagert, wobei das Antriebsrad 54 gegebenenfalls unter Zwischenschaltung einer eingetragenen Kupplung mit einem Antriebsmotor 56, wie Elektro-, Pneumatik-, Hydraulik- oder Hybridmotor und dgl., gekuppelt ist. Der Antriebsmotor 56 ist ebenfalls am Rahmengehäuse 47, insbesondere an einer Innenwand 51 befestigt. Eine derartige Antriebsvorrichtung 37 ist allgemein als so genannter Omega-Antrieb bekannt. Weitere Ausführungsvarianten der Antriebsvorrichtung 37 für den Stellwagen 32 sind später beschrieben.

Wie in dieser Figur ebenfalls ersichtlich, weist die Vorrichtung 1 das Energie- und Signalübertragungssystem 50 auf, über welches der Stellwagen 32 mit dem Rechnersystem verbunden ist und der Antriebsmotor 56 mit elektrischer oder mechanischer Energie versorgt wird sowie Signale/Daten zwischen dem Rechnersystem und dem Antriebsmotor 56 übertragen werden. Gemäß dieser Ausführung ist das Energie- und Signalübertragungssystem 50 durch eine Vielzahl von elektrischen Leitungen oder Druckmittel führenden Leitungen und/oder eine Busleitung eines Bussystems, wie beispielsweise Profi-Bussystem und dgl. gebildet. Diese Leitungen und/oder die Busleitung werden während der Verstellbewegung des Stellwagens 32 mitbewegt und ist deshalb zu deren Führung eine an sich bekannte Energiekette 57 vorgesehen. Der Antriebsmotor 56 ist über eine elektrische Signalleitung oder das Bussystem mit der Steuereinheit vom Rechnersystem des Lagerverwaltungssystems verbunden. Das Rechnersystem steuert den Antriebsmotor 56 an. Dazu umfasst das Rechnersystem die Steuereinheit und einen mit dieser verbundenen Rechner (Personal Computer).

Wie nicht weiters dargestellt, kann für das Energie- und Signalübertragungssystem 50 alternativ auch eine an sich bekannte Schleifleitungsanordnung eingesetzt werden, die am Tragrahmen 8, insbesondere am Tragprofil 34 bewegungsfest angeordnete Schleifleitungen und am Stellwagen 32 befestige Schleifkontakte umfasst. Dabei sind die elektrische Energie und elektrischen Steuersignale für den Antriebsmotor 56 mittels den Schleifleitungen zuführbar und mittels den Schleifkontakten aus den Schleifleitungen abnehmbar.

Eine andere, nicht dargestellte Ausführung des Energie- und Signalübertragungssystems 50 besteht darin, dass dieses durch die im Zugmittel 53 ohnehin vorhanden Zugstränge aus Aramid- oder Glasfasern oder Stahlcord, gebildet ist, also Materialien, die elektrisch leitfähig sind, und die Energieversorgung und Übertragung der Steuer- und Datenübertragungssignale über die Zugstränge des Zugmittels 53 zwischen dem Antriebsmotor 56 und der am Rechnersystem angeschlossenen Steuereinheit erfolgt. Dazu sind die Zugstränge über elektrische Leitungen mit dem Antriebsmotor 56 und der Steuereinheit verbunden.

Schließlich ist es aber auch möglich, dass das nicht weiters dargestellte Energie- und Signalübertragungssystem 50 durch eine Sende- und Empfangseinheit am Stellwagen 32 sowie eine Sende- und Empfangseinheit an der Steuereinheit vom Rechnersystem gebildet ist, sodass die elektrische Energie und/oder elektrischen Steuersignale und/oder Datenübertragungssignale drahtlos zwischen dem Stellwagen 32 und dem ebenfalls die Sende- und Empfangseinheit aufweisenden Rechnersystem übertragen werden. Der Antriebsmotor 56 erhält seine Steuersignale über eine ebenfalls am Stellwagen 32 angeordnete Sende- und Empfangseinheit, die über beispielsweise eine optische Datenübertragung, insbesondere Infrarot- Datenübertragung oder Laser-Datenübertragung, mit der Steuereinheit verbunden ist. Ebenso ist eine berührungslose Signal- und/oder Datenübertragung zwischen der Steuereinheit und dem Antriebsmotor 56 und/oder berührungslose Energieversorgung des elektrischen Antriebsmotors 56 auf elektromagnetischem und/oder induktivem Wege, wie Funk, z.B. Bluetooth^{™}, WLAN (Wireless Local Area Network), Wirbelfelder möglich.

Außerdem können auch die beiden Messeinrichtungen 33 mittels dem oben beschriebenen Energie- und Signalübertragungssystem 50 mit der Steuereinheit verbunden werden und mit elektrischer Energie auf kontaktierendem Wege, wie den Leitungen und/oder die Busleitung, Schleifleitungsanordnung oder den Zugsträngen des Zugmittels 53, die an der Steuereinheit vom Rechnersystem und den Messeinrichtungen 33 angeschlossen sind, oder berührungslosem Wege, wie elektromagnetisch, optisch oder induktiv, versorgt werden.

In einer anderen Ausführung sind die Messeinrichtungen 33 jeweils mit einer, nicht weiters dargestellten Sende- und Empfangseinheit ausgestattet, wobei über die Empfangseinheit auf drahtlosem Wege eine Energieversorgung der jeweiligen Messeinrichtung 33 erfolgt und mittels der Sendeeinheit die elektrischen Messsignale aus der Messung der Distanz 41 zur Bestimmung des Füllstandes 31 im entsprechenden Vorratsmagazin 13, entweder an die am Rechnersystem angeschlossene Steuereinheit oder an eine am Rechnersystem angeschlossene, noch näher zu beschreibende Bedieneinheit übermittelt werden.

Die Messeinrichtungen 33 bilden Distanzmesseinrichtungen aus und sind beispielsweise durch ein opto-elektronisches Messsystem, insbesondere Laser- oder Infrarotmesssystem oder Triangulationssensor und dgl., oder durch einen Ultraschallsensor gebildet, mit denen die Distanz 41 im Ausmaß von etwa 2,5 m problemlos gemessen und der Füllstand 31 in den jeweiligen Vorratsmagazinen 13 zuverlässig ermittelt werden kann. Sind Vorratsmagazin 13 mit niedriger Füllhöhe 44 vorgesehen, so wäre es auch denkbar, dass die Messeinrichtungen 33 durch einen kapazitiven Sensor gebildet sind und ein Abtastfeld der Messeinrichtungen 33 im Wesentlichen parallel zur Längserstreckung der Vorratsmagazine 13 und im Wesentlichen senkrecht auf die Abgabeebene 24 der Abgabevorrichtungen 21 ausgerichtet ist.

Wie in Zusammenhang mit Fig. 1 ersichtlich, ist eine exakte Zuordnung der anzufahrenden Messpositionen des Stellwagens 32 zu einem jeden der Vorratsmagazine 13 gefordert, um für jedes der Vorratsmagazine 13 die zugehörigen Füllstände 31 ermitteln zu können. Es wird davon ausgegangen, dass für diesen Fall der Stellwagen 32 ununterbrochen pendelnd zwischen dem in Verstellrichtung - gemäß Pfeil 46 - ersten Vorratsmagazin 13 und letzten Vorratsmagazin 13 der Speichereinrichtung 4, 4' verfahren wird und die Füllstände 31 in einem jeden Vorratsmagazin 13 sequentiell ermittelt werden. Über den Verstellweg des Stellwagens 32 betrachtet, sind genau so viele Messpositionen anzufahren, wie eine Speichereinrichtung 4, 4' Vorratsmagazine 13 aufweist, wobei eine Messposition derart zu verstehen ist, dass die Messeinrichtung 33 dabei etwa mittig zwischen den Schenkeln 16 und oberhalb des Füllraumes 40 eines Vorratsmagazins 13 positioniert ist.

Damit eine solche Zuordnung einer vom Stellwagen 32 angefahrenen Messposition zu einem Vorratsmagazin 13 möglich ist, ist ein Positioniersystem 58 für die Positionierung des Stellwagens 32 gegenüber den einzelnen Vorratsmagazinen 13 der Speichereinrichtung 4, 4' vorgesehen. Dabei wird fortlaufend die Istposition des Stellwagens 32 an die Steuereinheit vom Rechnersystem übermittelt. Die Steuereinheit vergleicht die Istposition mit den vom Rechnersystem vorgegebenen und den Vorratsmagazinen 13 zugeordneten Messpositionen und bei Übereinstimmung der Istposition mit jeweils einer der Messpositionen, wird die Distanz 41 gemessen und als elektrisches Messsignal an die Steuereinheit übermittelt, worauf in oben beschriebener Weise der Füllstand 31 bzw. der Istbestand an Waren 4 im jeweiligen Vorratsmagazin 13 ermittelt wird.

Andererseits ist es auch möglich, dass für einen im Rechnersystem eingegebenen Auftrag nur in einzelnen Vorratsmagazinen 13 die Füllstände 31 ermittelt werden müssen. Für diesen Fall werden vom Stellwagen 32 nur jene Messpositionen angefahren, in denen die für diesen Auftrag zu kommissionierenden Waren 2 aufbewahrt sind. Jede Messposition befindet sich unmittelbar oberhalb jedes Vorratsmagazins 13. An diesen Messpositionen wird sodann die Distanz 41 zur Bestimmung der Füllstände 31 gemessen. Zum positionierten Anfahren dieser Messpositionen wird der Antriebsmotor 56 vom Rechnersystem entsprechend angesteuert und dabei fortlaufend die Istposition vom Stellwagen 32 an das Rechnersystem übermittelt.

Nach beiden Varianten erfolgt die Messung der Distanz 41, sobald eine Messposition erreicht ist. Während der Messung kann der Stellwagen 32 in der Messposition kurzzeitig verweilen oder mit verringerter Verstellgeschwindigkeit verfahren oder mit normaler Verstellgeschwindigkeit verfahren.

Das Positioniersystem 58 zur Steuerung der Position vom Stellwagen 32, ist vorzugsweise durch eine mit der Steuereinheit verbundene Wegmessvorrichtung gebildet, über welche die Istposition vom Stellwagen 32 bzw. eine Relativlage des Stellwagens 32 gegenüber den einzelnen Vorratsmagazinen 13 sensorisch erfasst wird. Die Wegmessvorrichtung ist durch einen an sich bekannten, kapazitiven Wegaufnehmer, induktiven Wegaufnehmer, magnetischen Wegaufnehmer oder optoelektronischen Wegaufnehmer gebildet. Dabei macht man sich das Messverfahren der absoluten und inkrementalen Wegmessung zu Nutze.

Nach der gezeigten Ausführung, ist der Antriebsmotor 56 mit einem Resolver bzw. Inkrementalgeber als Positioniersystem 58 versehen, mittels dem die Istposition vom Stellwagen 32 permanent erfasst wird. Anhand dem permanenten Vergleich der Istposition mit den Sollpositionen, die den anzufahrenden Messpositionen entsprechen, kann nun der Stellwagen 32 geregelt angesteuert werden.

Das Positioniersystem 58 kann andererseits auch durch ein nicht dargestelltes Barcode-Positioniersystem gebildet sein, bei dem über die gesamte Länge des Verstellweges vom Stellwagen 32 ein Barcodeetikett am Tragrahmen 8 der Vorrichtung 1 befestigt und über ein am Stellwagen 32 angeordnetes Barcodelesegerät nach dem optischen Messverfahren, insbesondere mittels einem sichtbaren Rotlichtlaser, die Istposition vom Stellwagen 32 relativ zum Barcodeband bzw. dem Tragrahmen 8 ermittelt wird. Die ermittelte Istposition bzw. der Istpositionswert wird an die Steuereinheit übergeben.

Bei niedrigen mechanischen Beanspruchungen wäre es auch denkbar, dass entlang dem Verstellweg vom Stellwagen 32, einem jeden Vorratsmagazin 13 zugeordnet, Näherungssensoren oder mechanisch wirkende Endschalter vorgesehen sind, über welche die Messpositionen oberhalb eines jeden Vorratsmagazins 13 exakt angefahren werden können. Der Verstellweg vom Stellwagen 32 erstreckt sich über die gesamte Längserstreckung der Speichereinrichtungen 4, 4'.

Weiterhin besteht auch die Möglichkeit, dass das Positioniersystem 58 ein nicht gezeigtes Positionsortungssystem, insbesondere eine Navigationsvorrichtung in Form von GPS zur Erfassung der Istposition des Stellwagens 32 gegenüber einem jeden einzelnen Vorratsmagazin 13 umfasst. Dazu sind der Stellwagen 32 mit einer Sende- und/oder Empfangseinrichtung und zum anderen die Steuereinheit mit einer Sende- und/oder Empfangseinrichtung versehen, über die ein drahtloser Datenaustausch erfolgt.

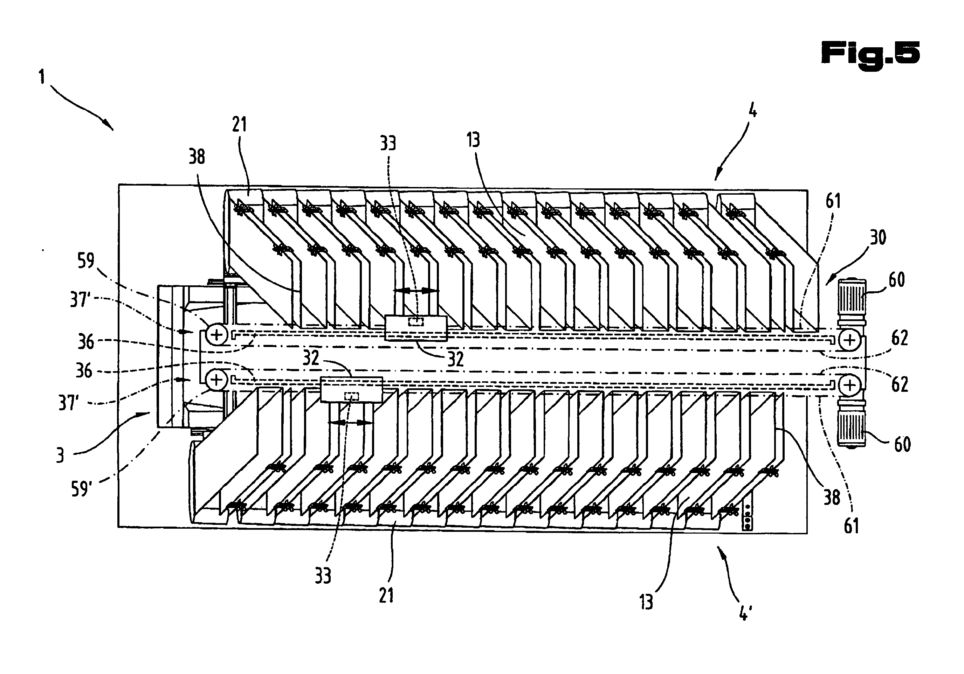

In der Fig. 5 ist eine weitere mögliche Ausführungsvariante der Erfassungseinrichtung 30 mit zwei Stellwagen 32 und den diesen zugeordneten Antriebsvorrichtungen 37' in stark vereinfachter, schematischer Darstellung gezeigt. Die Antriebsvorrichtung 37' umfassen jeweils einen endlos umlaufenden Zugmitteltrieb 59, 59', die mit je einem Antriebsmotor 60, wie Elektro-, Pneumatik-, Hydraulik- oder Hybridmotor und dgl., gekuppelt sind. Die Antriebsmotoren 60 sind mit der Steuereinheit verbunden. Die Stellwagen 32 sind jeweils mit einem Trum 61 der Zugmittel 62 bewegungsfest verbunden. Die Antriebsmotoren 60 der beiden Zugmitteltriebe 59, 59' sind entweder jeder für sich separat ansteuerbar, sodass die Stellwagen 32 unabhängig voneinander verfahrbar sind, oder synchronisiert, sodass die Stellwagen 32 wahlweise auch synchron verfahrbar sind. Die fortlaufende Bestimmung der Istpositionen der Stellwagen 32 wird beispielsweise über, an den Antriebsmotoren 60 vorgesehen Resolver als Wegmessvorrichtung ermöglicht. Bei größeren Längen der Speichereinrichtungen 4, 4' ist es zweckmäßig, dass die Stellwagen 32 jeweils entlang einer, in strichlierte Linien dargestellten Führungsbahn 36, insbesondere einer Linearführung, geführt verstellbar ist. Die Führungsbahnen 36 erstrecken sich mit Abstand parallel zueinander und in Längsrichtung der Speichereinrichtungen 4, 4'. Jeder Stellwagen 32 ist wiederum mit wenigstens einer, oben beschriebenen Messeinrichtung 33 ausgestattet. Die Stellwagen 32 sind jeweils oberhalb von oberen Enden 38 der Vorratsmagazine 13 einer jeden Speichereinrichtung 4, 4' angeordnet und über den jeweiligen Zugmitteltrieb 59, 59' zwischen den einzelnen Vorratsmagazinen 13 positioniert verfahrbar. Über die Messeinrichtungen 33 wird die Distanz 41 in zumindest einigen der in Verstellrichtung - gemäß Pfeil 46 - der Stellwagen 32 aufeinander folgenden Vorratsmagazine 13 der Speichereinrichtungen 4, 4' sequentiell erfasst und anhand deren der Füllstand 31 in den betreffenden Vorratsmagazinen 13 ermittelt.

In einer anderen, nicht gezeigten Ausführung ist die Antriebsvorrichtung 37, 37' für den Stellwagen 32 durch einen Zahnrad-Zahnstangenantrieb gebildet. Die Zahnstange ist am Tragrahmen 8 befestigt und das diese kämmende Zahnrad am Stellwagen 32 gelagert, welches an einen Antriebsmotor gekuppelt ist. Ebenso ist ein reibschlüssig wirkender Antrieb des Stellwagens 32 denkbar.

Wie nicht weiters dargestellt, kann die Antriebsvorrichtung 37, 37' für den Stellwagen 32 ebenso durch einen Linearmotor, insbesondere Asynchron- und Synchron-Linearmotor gebildet werden, wie dieser an sich aus dem Stand der Technik bekannt ist. Linearmotoren erlauben die direkte Erzeugung einer linearen Bewegung ohne Getriebe. Sie bestehen aus einem stromdurchflossenen Primärteil (vergleichbar mit dem Stator eines Rotationsmotors) und einem Reaktionsteil, dem Sekundärteil (vergleichbar mit dem Rotor eines Rotationsmotors). Zweckmäßig ist der Primärteil am Tragrahmen 8, insbesondere am Tragprofil 34 befestigt, während der Sekundärteil an dem entlang einer oben beschriebenen Führungsbahn 36, im Wesentlichen spielfrei geführt verstellbaren Stellwagen 32 angeordnet ist. Der stationäre Primärteil erstreckt sich durchgehend über die gesamte Länge des Verstellweges vom Stellwagen 32. Für den berührungsfreien Antrieb des Stellwagens 32 bietet sich beispielsweise ein Langstator-Synchronmotor an. Dabei wird die Antriebsleistung dem im Verstellweg befindlichen Primärteil zugeführt, während der Stellwagen 32 nur den Erregerteil enthält. Der Erregerteil ist so angeordnet, dass der Stellwagen 32 von den Magnetfeldkräften getragen wird. Auch bei dieser Ausführung ist zwischen dem Stellwagen 32 und dem Tragrahmen 8 ein Positioniersystem, insbesondere eine Wegmessvorrichtung vorgesehen, die mit der Steuereinheit über das oben beschriebene Energie- und Signalübertragungssystem 50 verbunden ist.

Natürlich sind auch alle anderen, aus dem Stand der Technik bekannten Antriebsvorrichtungen 37, 37' einsetzbar, die einen linearen Antrieb des Stellwagens 32 ermöglichen.

Wie aus Gründen der besseren Übersicht nur in Fig. 3 eingetragen, ist jedem Vorratsmagazin 13 der Speichereinrichtungen 4, 4' zumindest eine Bedieneinheit 63 zugeordnet. Diese weist eine Eingabevorrichtung 64 und/oder eine akustische und/oder optische Ausgabevorrichtung 65 und gegebenenfalls eine in strichlierte Linien eingetragene Sende- und Empfangseinheit 66 zur drahtlosen Daten- und/oder Signalübertragung zwischen der Steuereinheit des Rechnersystems und der Bedieneinheit 63 und/oder der betreffenden Messeinrichtung 33 und der Bedieneinheit 63 auf. Die Bedieneinheit 63 ist über eine elektrische Leitung vorzugsweise eines Bussystems oder optische Datenübertragung, beispielsweise Infrarot-Datenübertragung oder Laser-Datenübertragung, mit der Steuereinheit verbunden.

Die Eingabevorrichtung 64 ist beispielsweise eine Tastatur, Touch-Screen oder ein Spracherkennungssystem. Die Ausgabevorrichtung 65 umfasst ein optisches und/oder akustisches Ausgabeelement, beispielsweise in Gestalt einer Warnlampe oder Anzeigetafel, die anzeigt, ob in dem betreffenden Vorratsmagazin 13 ein ausreichender Vorrat an Waren 2 vorhanden ist, oder ob die Gefahr besteht, dass diese Waren 2 mit der Abarbeitung der im Rechnersystem eingegebenen Aufträge alle abgegeben werden, sodass Waren 2 nachgefüllt werden müssen. Ebenso kann die Ausgabevorrichtung 65 ein Sprachausgabemodul und/oder eine numerische und/oder alphanumerische Anzeige, beispielsweise in Gestalt eines Bildschirmes oder einer LED-Anzeige, aufweisen, an der beispielsweise der aktuelle Füllstand 31 oder der aus den (der) im Rechnersystem eingegebenen Aufträgen und/oder prognostizierten Absatzmenge an Waren 2 errechnete Bedarf an weiteren Waren 2 bzw. die erforderliche Nachfüllmenge in den Vorratsmagazinen 13 und usw. ausgegeben wird. Natürlich kann die Eingabevorrichtung 64 und Ausgabevorrichtung 65 auch als kombinierte Baueinheit in Form eines Touch-Screens ausgebildet werden. Die Bedieneinheit 63 ist bevorzugt unmittelbar am betreffenden Vorratsmagazin 13 befestigt.

Andererseits kann die Bedieneinheit 63 auch als mobiles Handbediengerät ausgebildet sein, das mit einer Sende- und Empfangseinheit 66 ausgestattet ist, die über beispielsweise eine optische Signal- bzw. Datenübertragung, insbesondere Infrarot- Datenübertragung oder Laser-Datenübertragung, mit der Steuereinheit und/oder den Messeinrichtungen 33 verbunden ist. Auch ist eine drahtlose Übertragung der Daten und/oder Signale durch eine Funkverbindung zwischen der Bedieneinheit 63 und/oder Steuereinheit und/oder den Messeinrichtungen 33 möglich. Dazu ist Steuereinheit und/oder sind die Messeinrichtungen 33 ebenfalls mit einer Sende- und Empfangseinheit ausgestattet.

Eine andere, nicht gezeigte Ausführung der Vorrichtung 1 zum Bereitstellen von stapelbaren Waren 2 besteht darin, dass diese ausschließlich eine Speichereinrichtung 4 mit den in deren Längsrichtung in einer Reihe fluchtend hintereinander angeordneten, schachtartigen, länglichen Vorratsmagazinen 13, die am unteren Ende 20 eines jeden Vorratsmagazins 13 vorgesehene Abgabevorrichtungen 21 sowie die Erfassungseinrichtung 30 umfasst. Die Erfassungseinrichtung 30 weist wenigstens einen, oberhalb von oberen Enden 38 der Vorratsmagazine 13 angeordneten und über die Antriebsvorrichtung 37, 37' zwischen den einzelnen Vorratsmagazinen 13 in Längsrichtung der Speichereinrichtung 4 positioniert verfahrbaren Stellwagen 32 auf. Der Stellwagen 32 ist mit wenigstens einer Führungsanordnung 35 entlang der in Längsrichtung der Speichereinrichtung 4 verlaufenden und benachbart zu den oberen Ende 38 der Vorratsmagazine 13 angeordneten Führungsbahn 36, insbesondere einer Linearführung 36' geführt. Am Stellwagen 32 ist die wenigstens eine Messeinrichtung 33 angeordnet, über die die Distanz 41 zwischen der im Vorratsmagazin 13 bereitgestellten, obersten Ware 2 und dem maximalen, oberen Füllstandsbegrenzung 42 eines Vorratsmagazins 13 während der Verfahrbewegung des Stellwagens 32 sequentiell erfasst werden kann. Aus der Distanz 41 wird vom Rechnersystem der Füllstand 31 von Waren 2 in den jeweiligen Vorratsmagazinen 13 errechnet. Die Messeinrichtung 33 ist quer zur Führungsbahn 36 in Richtung der Speichereinrichtung 4 versetzt und oberhalb von oberen Enden 38 der Vorratsmagazine 13 der Speichereinrichtungen 4 angeordnet sowie derart ausgerichtet, dass ein von der Messeinrichtung 33 ausgesandter Abtaststrahl 39 oder eine ausgestrahlte Abtastwelle im Wesentlichen senkrecht auf die Abgabeebene 24 der Abgabevorrichtung 21 verläuft. Die Vorrichtung 1 bildet nach dieser Ausführung beispielsweise einen Verkaufsautomaten aus, bei dem die gewünschte Ware 2 über eine Abgabeöffnung direkt an den Verbraucher abgegeben wird. Die Vorratsmagazine 13 sind nach dieser Ausführung beispielsweise lotrecht ausgerichtet.

Im Nachfolgenden wird nun das Verfahren zur Bereitstellung von stapelbaren Waren 2 für die voran beschriebene Vorrichtung 1 beschrieben. Es wird davon ausgegangen, dass die Waren 2 sortenrein in den Vorratsmagazinen 13 bereitgestellt werden, daher, dass in jedem Vorratsmagazin 13 nur eine Sorte bzw. Type von Ware 2 eingeordnet wird. Grundsätzlich kann die Kommissionierung von Waren 2 auf zwei unterschiedliche Arten erfolgen. Zum einen können Warenträger, insbesondere Transportbehälter, entlang der Fördereinrichtung 3 transportiert werden. Diese Warenträger sind dazu mit einer, einem in das Rechnersystem eingegebenen Auftrag zugeordneten Codierung versehen. Die Codierung umfasst eine Identifikationsnummer, über die eine eindeutige Zuordnung des Warenträgers zu einem Auftrag möglich ist. Die Warenträger werden entlang der Fördereinrichtung 3 transportiert und an einer Vielzahl von beidseitig der Fördereinrichtung 3 angeordneten Vorratsmagazinen 13 vorbeigeführt und während des Vorbeitransportes an den Vorratsmagazinen 13 mit den, der jeweiligen Codierung zugeordneten Waren 4 beladen. Entsprechend der Zuordnung der Codierung eines Warenträgers, werden die Abgabevorrichtungen 21 vom Rechnersystem angesteuert und über diese die vereinzelten Waren 2 an den Transportbehälter abgegeben.

Zum anderen, werden die entsprechend den eingegebenen Aufträgen zu kommissionierenden Waren 2, unmittelbar am Förderorgan 5 der Fördereinrichtung 3 abgelegt. Dazu werden während dem das Förderorgan 5 unter den Vorratsmagazinen 13 vorbeibewegt wird, jene Abgabevorrichtungen 21 angesteuert, über welche die zu kommissionierenden Waren 2 aus den Vorratsmagazinen 13 ausgegeben werden sollen. Die abgegebenen Waren 2 sind am Förderorgan 5 auftragsgebunden zusammengefasst. Am Abgabeende der ersten Fördereinrichtung 3 ist eine zweite Fördereinrichtung (nicht dargestellt) zum Transportieren von zu Aufträgen zusammengefassten, kommissionierten Waren 2 in Warenträgern angeordnet. In einem Warenträger werden die Waren 2 eines Auftrags aufgenommen.

Um einen Stillstand der Vorrichtung 1, der ausgelöst wird, wenn aus einem leeren Vorratsmagazin 13 eine Ware 2 angefordert wird und deshalb der in das Rechnersystem eingegebene, zumindest eine Auftrag nicht erfüllt werden kann, zu verhindern, muss dafür gesorgt werden, dass zumindest in jenen Vorratsmagazinen 13, in denen die für den Auftrag angeforderten Waren 2 enthalten sind, ausreichend aufgefüllt sind.

Erfindungsgemäß ist es nun vorgesehen, dass die Distanz 41 zwischen der obersten Ware 2 und der maximalen, oberen Füllstandsbegrenzung 42 nach Vorgabe wenigstens eines Auftrages oder einer prognostizierten Absatzmenge an Waren 2 in einem oder mehreren Vorratsmagazinen 13 erfasst und daraus der Füllstand 44 bzw. Istbestand an Waren 2 in einem oder mehreren Vorratsmagazinen 13 ermittelt werden.

Wird ein Auftrag, der nur eine Sorte von (identischen) Ware 2 umfasst, in das Rechnersystem elektronisch eingegeben, wird vom Rechnersystem, entsprechend diesem Auftrag ein Sollbestand, daher die Anzahl an benötigten Waren 2 für jenes Vorratsmagazin 13 errechnet, in welchem die dem Auftrag zugeordnete Ware 2 bereitgestellt ist. Danach wird über die Messeinrichtung 33 auf berührungslosen Wege die oben beschriebene Distanz 41 erfasst und daraus der Füllstand 31 sowie unter Einbeziehung der Abmessungen 45 in Stapelrichtung der übereinander gestapelten Waren 2 der Istbestand an Waren 2 in diesem Vorratsmagazin 13 errechnet. Diese Berechnung wird vom Rechnersystem, insbesondere der Steuereinheit, durchgeführt. Darauf folgend wird der Istbestand an Waren 2 mit dem aus dem Auftrag für das Vorratsmagazin 13 errechneten Sollbestand an Waren 2 verglichen. Ist der Istbestand an Waren 2 geringer als der für die ordnungsgemäße Abarbeitung des Auftrags benötigte Sollbestand an Waren 2 und/oder wird der Sollbestand an Waren 2 in Kürze unterschritten werden, wird eine Bedarfsmeldung für die Bedienperson am Rechnersystem, insbesondere einem Rechner (PC), und/oder an der Ausgabevorrichtung 65 der Bedieneinheit 63 ausgegebenen und die Bedienperson aufgefordert, dieses Vorratsmagazin 13 aufzufüllen. Die Bedarfsmeldung kann als Sprachinformation oder optisch oder akustisch erfolgen, beispielsweise durch eine Warnlampe, Text- oder Nummemanzeige oder Signalhorn.

Umfasst der eingegebene Auftrag mehrere, unterschiedliche Waren 2, wird der Sollbestand an Waren 2 entsprechend dem eingegebenen Auftrag an jenen Vorratsmagazinen 13 vom Rechnersystem errechnet, in welchem die unterschiedlichen Waren 2 bereitgestellt werden. Beispielsweise ist die erste Sorte von Ware 2 im ersten Vorratsmagazin 13 und die zweite Sorte von Ware 2 im zweiten Vorratsmagazin 13 usw. bereitgestellt. Darauf folgend wird über die Messeinrichtung 33 auf berührungslosen Wege in diesen betreffenden Vorratsmagazinen 13 jeweils die Distanz 41 sequentiell erfasst und jeder aktuelle Füllstand 31 sowie unter Einbeziehung der Abmessungen 45 in Stapelrichtung der übereinander gestapelten Waren 2 der Istbestand an Waren 2 in diesen betreffenden Vorratsmagazinen 13 ermittelt. Danach erfolgt ein Vergleich des Istbestands an Waren 2 in den betreffenden Vorratsmagazinen 13 mit dem errechneten Sollbestand für diese betreffenden Vorratsmagazine 13. Eine Bedarfsmeldung für die Bedienperson zum Nachfüllen eines oder mehrerer Vorratsmagazine 13, wird nur dann ausgegeben, wenn in einem der Vorratsmagazine 13 der Istbestand an Waren 2 den Sollbestand der zu dem eingegebenen Auftrag angeforderten, unterschiedlichen Waren 2 unterschreitet und/oder in Kürze unterschreiten wird.

Wird ein dem ersten Auftrag nachfolgender, zweiter, dritter usw. Auftrag in das Rechnersystem eingegeben, wird vorerst vom Rechnersystem anhand aller Aufträge, ein benötigter Sollbestand an gleichen oder unterschiedlichen Waren 2 in einem Vorratsmagazin 13 oder mehreren Vorratsmagazinen 13 ermittelt. Enthält der Auftrag nur eine Sorte von Ware 2, wird die Distanz 41 zwischen der obersten Ware 2 und der oberen Füllstandsbegrenzung 42 in diesem einen Vorratsmagazin 13 gemessen, während, wenn der Auftrag unterschiedliche Sorten von Waren 2 umfasst, die Distanz 41 zwischen der obersten Waren 2 und der maximalen, oberen Füllstandsbegrenzung 42 in jenen Vorratsmagazinen 13 sequentiell gemessen wird, wo die unterschiedlichen Waren 2 bereitgestellt werden. Dementsprechend werden der aktuelle Füllstand 31 sowie der Istbestand an Waren 2 in nur einem Vorratsmagazin 13 oder mehreren Vorratsmagazinen 13 vom Rechnersystem errechnet. Danach erfolgt der Vergleich zwischen dem Istbestand an Waren 2 in dem einen betreffenden Vorratsmagazin 13 oder in den betreffenden Vorratsmagazinen 13 mit dem Sollbestand für dieses eine betreffende Vorratsmagazin 13 oder die betreffenden Vorratsmagazine 13. Eine Bedarfsmeldung eines Vorratsmagazins 13 wird am Rechnersystem und/oder an der Bedieneinheit 63 ausgegeben, wenn in dem betreffenden Vorratsmagazin 13 oder in einem der betreffenden Vorratsmagazine 13 der Istbestand an Waren 2 den Sollbestand der für alle eingegebenen Aufträge angeforderten Waren 2 unterschreitet und/oder in Kürze unterschreiten wird.

Eine optimale Ressourcenplanung an Bedienpersonen wird dann erreicht, wenn in das Rechnersystem eine prognostizierte Absatzmenge von wenigstens einer Sorte Ware 2 innerhalb eines gesetzten Zeitfensters, beispielsweise ein Tag, eine Woche, elektronisch erfasst wird. Die prognostizierte Absatzmenge beruht auf Basis von Erfahrungswerten bzw. statistischen Auswertungen. Die Eingabe in das Rechnersystem erfolgt als quantitative Menge. Beispielsweise wurden von einer Warensorte in einer Woche 100 Stück Waren 2 benötigt. Anhand der prognostizierten Absatzmenge, wird der benötigte Sollbestand an Waren 2 in einem betreffenden Vorratsmagazin 3 vom Rechnersystem ermittelt, in diesem Fall 100 Waren 2. Danach wird über die Messeinrichtung 33 auf berührungslosen Wege die oben beschriebene Distanz 41 erfasst und daraus der Füllstand 31 sowie unter Einbeziehung der Abmessungen 45 in Stapelrichtung der übereinander gestapelten Waren 2 der Istbestand an Waren 2 in diesem Vorratsmagazin 13 errechnet. Sodann erfolgt ein Vergleich des Istbestands an Waren 2 in diesem betreffenden Vorratsmagazin 13 mit dem aus der prognostizierten Absatzmenge für dieses Vorratsmagazin 13 berechneten Sollbestand. Wird der für die prognostizierte Absatzmenge errechnete Sollbestand unterschritten und/oder in Kürze unterschritten werden, wird eine Bedarfsmeldung an die Bedienperson abgegebenen und das betreffende Vorratsmagazin 13 muss nachgefüllt werden.

Wird in das Rechnersystem eine prognostizierte Absatzmenge für mehrere unterschiedliche Waren 2 für ein gesetztes Zeitfensters eingegeben, wird entsprechend der prognostizierten Absatzmenge ein benötigter Sollbestand an unterschiedlichen Waren 2 in den betreffenden Vorratsmagazinen 13 vom Rechnersystem errechnet. Darauf folgend wird wiederum in diesen betreffenden Vorratsmagazinen 13 jeweils die Distanz 41 auf berührungslosem Wege sequentiell gemessen und jeder Istbestand an Waren 2 in diesen betreffenden Vorratsmagazinen 13 vom Rechnersystem errechnet. Nach dem Vergleich vom Istbestand an Waren 2 in diesen betreffenden Vorratsmagazinen 13 mit dem für diese betreffenden Vorratsmagazine 13 errechneten Sollbestand, wird eine Bedarfsmeldung an die Bedienperson zum Nachfüllen eines Vorratsmagazins 13 dann ausgegeben, wenn der Istbestand an Waren 2 den Sollbestand der für die prognostizierte Absatzmenge benötigten, unterschiedlichen Waren 2 unterschreitet und/oder in Kürze unterschreiten wird.

Es sei an dieser Stelle darauf hingewiesen, dass die Eingabe der Aufträge und prognostizierten Absatzmenge an Waren 2 über eine Eingabevorrichtung, wie Tastatur, Touch-Screen, Spracheingabe und dgl. an einem Rechner (Personal Computer) des Rechnersystems erfolgt.

Schließlich wird nach dem Nachfüllvorgang neuerlich der Istbestand an Waren 2 in diesem einen aufgefüllten Vorratsmagazin 13 oder in den betreffenden, aufgefüllten Vorratsmagazinen 13 aus der über die Messeinrichtung 33 erfassten Distanz 41 ermittelt und die Bedarfsmeldung aufgehoben, solange, bis der Istbestand an Waren 2 wieder den Sollbestand an Waren 2 unterschreitet. Dadurch können zusätzliche Quittiertasten zum Bestätigen eines Nachfüllvorgangs an der Bedieneinheit 63 entfallen.

Die Distanz 41 wird, wie oben beschrieben, nur an jenem Vorratsmagazin 13 oder jenen Vorratsmagazinen 13 gemessen, in dem oder denen die Waren 2 bereitgestellt sind, die für den (die) in das Rechnersystem eingegebenen Auftrag (Aufträge) oder die in das Rechnersystem eingegebene, prognostizierte Absatzmenge an Waren 2 angefordert werden.

Andererseits ist es aber auch möglich, dass die Distanz 41 zwischen der obersten Ware 2 und der maximalen, oberen Füllstandsbegrenzung 42 in jedem Vorratsmagazin 13 der Speichereinrichtungen 4, 4' erfasst und die zugehörigen Füllstände 31 ermittelt werden. Dazu ist es nun vorgesehen, dass über die Messeinrichtungen 33 jeweils die Distanz 41 in den Vorratsmagazinen 13 der Speichereinrichtung 4, 4' ständig gemessen und der Istbestand in den Vorratsmagazinen 13 fortlaufend ermittelt werden. Andererseits kann aber auch die Distanz 41 in den Vorratsmagazinen 13 der Speichereinrichtung 4, 4' intermittierend erfasst und der aktuelle Istbestand in den Vorratsmagazinen 13 nach vorgegebenen Zeitintervallen fortlaufend ermittelt werden.

In einer möglichen Ausführung wird die Distanz 41 über am Stellwagen 32 befestigte Messeinrichtungen 33 erfasst, wobei eine Messeinrichtung 33 je einer Speichereinrichtung 4, 4' zugeordnet ist. Dazu wird der Stellwagen 32 in die Messposition oberhalb eines Vorratsmagazins 13 verfahren und die Distanz 41 zur Bestimmung des Istbestands dieses Vorratsmagazins 13 gemessen. Ist von einem weiteren Vorratsmagazin 13 der Istbestand zu ermitteln, wird der Stellwagen 32 in die weitere Messposition oberhalb eines weiteren Vorratsmagazins 13 verfahren. Der Stellwagen 32 fährt nur jenes Vorratsmagazin 13 oder jene Vorratsmagazine 13 an, in dem oder denen die für einen eingegebenen Auftrag oder eine eingegebene, prognostizierte Warenabsatzmenge zu kommissionierenden Waren 2 bereitgestellt sind. In einer anderen Variante der Ansteuerung, wird der Stellwagen 32 zwischen dem in dessen Verstellrichtung - gemäß Pfeil 46 - ersten und letzten Vorratsmagazin 13 fortlaufend pendelnd hin und her verfahren und dabei die Distanz 41 zur Ermittlung des Istbestands in einem Vorratsmagazin 13 oder in einem jeden Vorratsmagazin 13 erfasst.

Der Ordnung halber sei abschließend darauf hingewiesen, dass zum besseren Verständnis des Aufbaus der Vorrichtung 1, diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Vorrichtung | 36 | Führungsbahn |
| 2 | Ware | 36' | Linearführung |
| 3 | Fördereinrichtung | 37 | Antriebsvorrichtung |
| 4 | Speichereinrichtung | 37' | Antriebsvorrichtung |
| 4' | Speichereinrichtung | 38 | oberes Ende |
| 5 | Förderorgan | 39 | Abtaststrahl |
| | | 40 | Füllraum |
| 6 | Antrieb | | |
| 7 | Pfeil | 41 | Distanz |
| 8 | Tragrahmen | 42 | Füllstandsbegrenzung |
| 9 | Steher | 42' | Füllstandsbegrenzung |
| 10 | Aufstandsfläche | 43 | Oberfläche |
| | | 44 | Füllhöhe |
| 11 | Längsträger | 45 | Abmessung |
| 12 | Symmetrieebene | | |
| 13 | Vorratsmagazin | 46 | Pfeil |
| 14 | Befestigungsklemme | 47 | Rahmengehäuse |
| 15 | Basis | 48 | Gehäuseteil |
| | | 49 | Aufnahmekanal |
| 16 | Schenkel | 50 | Energie- und Signalübertragungssystem |
| 17 | Neigungswinkel | | |
| 18 | Neigungswinkel | 51 | Innenwand |
| 19 | Warennachfüllöffnung | 52 | Stützwand |
| 20 | unteres Ende | 53 | Zugmittel |
| | | 54 | Antriebsrad |
| 21 | Abgabevorrichtung | 55 | Rad |
| 22 | Mitnehmer | 55' | Andrückrad |
| 23 | Warenstapel | | |
| 24 | Abgabeebene | 56 | Antriebsmotor |
| 24' | Abgabeöffnung | 57 | Energiekette |
| 25 | Zugmittel | 58 | Positioniersystem |
| | | 59 | Zugmitteltrieb |
| 26 | Antriebsrad | 59' | Zugmitteltrieb |
| 27 | Umlenkrad | 60 | Antriebsmotor |
| 28 | Führungsblech | | |
| 30 | Erfassungseinrichtung | 61 | Trum |
| | | 62 | Zugmittel |
| 31 | Füllstand | 63 | Bedieneinheit |
| 32 | Stellwagen | 64 | Eingabevorrichtung |
| 33 | Messeinrichtung | 65 | Ausgabevorrichtung |
| 34 | Tragprofil | | |
| 35 | Führungsanordnung | 66 | Sende- und Empfangseinheit |

## Patentansprüche

1. Verfahren zur Bereitstellung von stapelbaren Waren (2) in schachtartigen Vorratsmagazinen (13) wenigstens einer Speichereinrichtung (4) und Überwachung eines Istbestands an Waren (2) in den Vorratsmagazinen (13) mittels einer Erfassungseinrichtung (30), bei dem vorerst die Waren (2) in den in einer Reihe hintereinander angeordneten, schachtartigen Vorratsmagazinen (13) sortenrein übereinander gestapelt und danach über am unteren Ende (20) eines jeden Vorratsmagazins (13) angeordnete, von einem Rechnersystem gesteuerte Abgabevorrichtungen (21) vereinzelt ausgegebenen werden, **dadurch gekennzeichnet, dass** die Erfassungseinrichtung (30) von einem Stellwagen (32) oberhalb der Vorratsmagazine (13) in Längsrichtung der Speichereinrichtung (4) bewegt und während der Verstellbewegung von der Erfassungseinrichtung (30) in einem oder mehreren Vorratsmagazinen (13) eine Distanz (41) zwischen der von der Abgabevorrichtung (21) am weitesten entfernt liegenden, obersten Ware (2) und einer maximalen, oberen Füllstandsbegrenzung (42) eines Vorratsmagazins (13) auf berührungslosem Wege gemessen sowie in einem oder mehreren Vorratsmagazinen (13) der Istbestand an Waren (2) unter Einbeziehung einer Warenabmessung (45) in Stapelrichtung errechnet wird, und **dass** in an sich bekannter Weise vom Rechnersystem wenigstens ein zumindest eine Ware (2) umfassender Auftrag elektronisch erfasst wird, worauf entsprechend dem Auftrag ein benötigter Sollbestand an Waren (2) in einem oder mehreren Vorratsmagazinen (13) vom Rechnersystem errechnet wird und darauf folgend der Istbestand an Waren (2) in einem oder mehreren Vorratsmagazinen (13) mit dem Sollbestand verglichen wird und **dass** eine Bedarfsmeldung für eine Bedienperson zum Nachfüllen eines oder mehrerer Vorratsmagazine (13) am Rechnersystem und/oder an einer Bedieneinheit (63) ausgegeben wird, wenn in einem der Vorratsmagazine (13) der Istbestand an Waren (2) den Sollbestand der für den zumindest einen, eingegebenen Auftrag benötigten Waren (2) unterschreitet und/oder in Kürze unterschreiten wird.

2. Verfahren zur Bereitstellung von stapelbaren Waren (2) in schachtartigen Vorratsmagazinen (13) wenigstens einer Speichereinrichtung (4) und Überwachung eines Istbestands an Waren (2) in den Vorratsmagazinen (13) mittels einer Erfassungseinrichtung (30), bei dem vorerst die Waren (2) in den in einer Reihe hintereinander angeordneten, schachtartigen Vorratsmagazinen (13) sortenrein übereinander gestapelt und danach über am unteren Ende (20) eines jeden Vorratsmagazins (13) angeordnete, von einem Rechnersystem gesteuerte Abgabevorrichtungen (21) vereinzelt ausgegebenen werden, **dadurch gekennzeichnet, dass** die Erfassungseinrichtung (30) von einem Stellwagen (32) oberhalb der Vorratsmagazine (13) in Längsrichtung der Speichereinrichtung (4) bewegt und während der Verstellbewegung von der Erfassungseinrichtung (30) in einem oder mehreren Vorratsmagazinen (13) eine Distanz (41) zwischen der von der Abgabevorrichtung (21) am weitesten entfernt liegenden, obersten Ware (2) und einer maximalen, oberen Füllstandsbegrenzung (42) eines Vorratsmagazins (13) auf berührungslosem Wege gemessen sowie in einem oder mehreren Vorratsmagazinen (13) der Istbestand an Waren (2) unter Einbeziehung einer Warenabmessung (45) in Stapelrichtung errechnet wird, und **dass** vom Rechnersystem eine prognostizierte Absatzmenge von wenigstens einer Ware (2) innerhalb eines gesetzten Zeitfensters elektronisch erfasst wird, worauf entsprechend der prognostizierten Absatzmenge ein benötigter Sollbestand an Waren (2) in einem oder mehreren Vorratsmagazinen (13) vom Rechnersystem errechnet wird und darauf folgend der Istbestand an Waren (2) in einem oder mehreren Vorratsmagazinen (13) mit dem Sollbestand verglichen wird und **dass** eine Bedarfsmeldung für eine Bedienperson zum Nachfüllen eines oder mehrerer Vorratsmagazine (13) am Rechnersystem und/oder an einer Bedieneinheit (63) ausgegeben wird, wenn in einem der Vorratsmagazine (13) der Istbestand an Waren (2) den Sollbestand der für die prognostizierte Absatzmenge benötigten Waren (2) unterschreitet und/oder in Kürze unterschreiten wird.

3. Verfahren nach Anspruch 1 oder 2, **dadurch gekennzeichnet, dass** die Bedarfsmeldung optisch und/oder akustisch und/oder als Sprachinformation ausgegebenen wird.

4. Verfahren nach Anspruch 1 oder 2, **dadurch gekennzeichnet, dass** der Stellwagen (32) entlang einer in Längsrichtung der Speichereinrichtung (4) verlaufenden und benachbart zu den oberen Ende (38) der Vorratsmagazine (13) angeordneten Führungsbahn (36) zwischen den in Verstellrichtung (46) des Stellwagens (32) aufeinander folgenden Vorratsmagazinen (13) verfahren wird.

5. Verfahren nach einem der Ansprüche 1 bis 4, **dadurch gekennzeichnet, dass** der Istbestand an Waren (2) in jenem oder jenen Vorratsmagazinen (13) ermittelt wird, in denen die für den oder die Aufträge oder die prognostizierte Absatzmenge bereitgestellten Waren (2) aufbewahrt sind und **dass** der erfasste Distanzwert vom betreffenden oder von den betreffenden Vorratsmagazinen (13) an das Rechnersystem oder eine Bedieneinheit (63) übermittelt wird.

6. Verfahren nach einem der Ansprüche 1 bis 4, **dadurch gekennzeichnet, dass** vom Stellwagen (32) jenes oder jene Vorratsmagazine (13) angefahren werden, in dem oder denen die für den oder die Aufträge oder die prognostizierte Absatzmenge bereitgestellten Waren (2) aufbewahrt sind und **dass** der Istbestand an Waren (2) vom betreffenden oder von den betreffenden Vorratsmagazinen (13) an das Rechnersystem oder eine Bedieneinheit (63) übermittelt wird.

7. Verfahren nach einem der Ansprüche 1 bis 4, **dadurch gekennzeichnet, dass** der Stellwagen (32) zwischen dem in dessen Verstellrichtung (46) ersten und letzten Vorratsmagazin (13) fortlaufend pendelnd hin und her verfahren und während seiner Verstellbewegung vom ersten Vorratsmagazin (13) zum letzten Vorratsmagazin (13) und/oder vom letzten Vorratsmagazin (13) zum ersten Vorratsmagazin (13), die Distanz (41) zur Ermittlung des Istbestands an Waren (2) in jedem Vorratsmagazin (13) erfasst sowie der Istbestand an Waren (2) von jedem Vorratsmagazin (13) an das Rechnersystem oder eine Bedieneinheit (63) übermittelt wird.

8. Verfahren nach einem der Ansprüche 1 bis 4, **dadurch gekennzeichnet, dass** der Stellwagen (32) zwischen dem in dessen Verstellrichtung (46) ersten und letzten Vorratsmagazin (13) nach Zeitintervallen gesteuert pendelnd hin und her verfahren und während seiner Verstellbewegung vom ersten Vorratsmagazin (13) zum letzten Vorratsmagazin (13) und/oder vom letzten Vorratsmagazin (13) zum ersten Vorratsmagazin (13) die Distanz (41) zur Ermittlung des Istbestands an Waren (2) in jedem Vorratsmagazin (13) erfasst sowie der Istbestand an Waren (2) von jedem Vorratsmagazin (13) an das Rechnersystem oder eine Bedieneinheit (63) übermittelt wird.

9. Verfahren nach einem der Ansprüche 1 bis 8, **dadurch gekennzeichnet, dass** die in den Vorratsmagazinen (13) bereitgestellten Waren (2) über die Abgabevorrichtungen (21) aus den Vorratsmagazinen (13) nach den Aufträgen entsprechend auf eine längs der Speichereinrichtung (4) angeordnete Fördereinrichtung (3) abgelegt oder zu einzelnen Aufträgen zusammengefasst in Transportbehältern transportiert werden.

## Claims

1. Method of dispensing stackable objects (2) in shaft-type dispenser magazines (13) of at least one storage unit (4) and monitoring an actual stock level of objects (2) in the dispenser magazines (13) by means of a detection system (30), whereby the objects (2) are firstly stacked one above the other on a sorted basis in the shaft-type dispenser magazines (13) aligned one after the other in a row and then individually dispensed by means of discharge mechanisms (21) controlled by a computer system disposed at the bottom end (20) of each of the dispenser magazines (13), **characterised in that** the detection system (30) is moved in the longitudinal direction of the storage unit (4) by a control carriage (32) disposed above the dispenser magazines (13) and, as the detection system (30) is being moved, a distance (41) between the uppermost object (2) lying the farthest away from the discharge mechanism (21) and a maximum, top level limit (42) of a dispenser magazine (13) is measured without contact, and the actual stock level of objects (2) is calculated in one or more dispensing magazines (13) taking account of an object dimension (45) in the stacking direction, and **in that** at least one object (2) forming part of an order is electronically detected by the computer system in a known manner, after which a desired stock level of objects (2) needed in one or more dispensers magazines (13) and corresponding to the order is calculated by the computer system, after which the actual stock level of objects (2) in one or more dispenser magazines (13) is compared with the desired stock level and a demand message is issued to an operator on the computer system and/ or at a control unit (63) to top up one or more dispenser magazines (13) if the actual stock level of objects (2) falls short of the desired stock level of objects (2) in one of the dispenser magazines (13) needed for the at least one order entered and/or will shortly fall short of it.

2. Method of dispensing stackable objects (2) in shaft-type dispenser magazines (13) of at least one storage unit (4) and monitoring an actual stock level of objects (2) in the dispenser magazines (13) by means of a detection system (30), whereby the objects (2) are firstly stacked one above the other on a sorted basis in the shaft-type dispenser magazines (13) aligned one after the other in a row and then individually dispensed by means of discharge mechanisms (21) controlled by a computer system disposed at the bottom end (20) of each of the dispenser magazines (13), **characterised in that** the detection system (30) is moved by a control carriage (32) above the dispenser magazines (13) in the longitudinal direction of the storage unit (4) and, as the detection system (30) is being moved, a distance (41) between the uppermost object (2) lying the farthest away from the discharge mechanism (21) and a maximum, top level limit (42) of a dispenser magazine (13) is measured without contact, and the actual stock level of objects (2) in one or more dispensing magazines (13) is calculated taking account of an object dimension (45) in the stacking direction, and **in that** a sales quantity predicted by the computer system for at least one object (2) within a set time window is electronically detected, after which a desired stock level of objects (2) needed in one or more dispenser magazines (13) corresponding to the predicted sales quantity is calculated by the computer system, after which the actual stock level of objects (2) is compared with the desired stock level in one or more dispenser magazines (13), and **in that** a demand message is issued on the computer system and/or at a control unit (63) to an operator to top up one or more dispenser magazines (13) if the actual stock level of objects (2) in one of the dispenser magazines (13) falls short of the desired stock level of objects (2) needed for the predicted sales quantity and/or will shortly fall below it

3. Method as claimed in claim 1 or 2, **characterised in that** the demand message is output optically and/or acoustically and/or as a voice message.

4. Method as claimed in one of claims 1 or 2, **characterised in that** the control carriage (32) is moved between the dispenser magazines (13) disposed one after the other in the displacement direction (46) of the control carriage (32) along a guide track (36) running in a longitudinal direction of the storage unit (4) and disposed adjacent to the top end (38) of the dispenser magazines (13).

5. Method as claimed in one of claims 1 to 4, **characterised in that** the actual stock level of objects (2) **in that** or those dispenser magazines (13) in which the objects (2) for the order or orders or the predicted sales quantity are stored and dispensed is detected, and **in that** the detected distance value of the relevant dispenser magazine or magazines (13) is transmitted to the computer system or a control unit (63).

6. Method as claimed in one of claims 1 to 4, **characterised in that** the control carriage (32) approaches only that or those dispenser magazines (13) in which the objects (2) for the order or orders or the predicted sales quantity are stored and dispensed, and **in that** the actual stock level of objects (2) of the relevant dispenser magazine or magazines (13) is transmitted to the computer system or a control unit (63).

7. Method as claimed in one of claims 1 to 4, **characterised in that** the control carriage (32) is moved continuously backwards and forwards in a pendulum motion between the first and last dispenser magazine (13) in its displacement direction (46) and the distance (41) for determining the actual stock level of objects (2) in each dispenser magazine (13) is detected during its displacement from the first dispenser magazine (13) to the last dispenser magazine (13) and/or from the last dispenser magazine (13) to the first dispenser magazine (13), and the actual stock level of objects (2) of each dispenser magazine (13) is transmitted to the computer system or to a control unit (63).

8. Method as claimed in one of claims 1 to 4, **characterised in that** the control carriage (32) is moved backwards and forwards in a pendulum motion between the first and last dispenser magazine (13) in its displacement direction (46) at controlled time intervals and the distance (41) for determining the actual stock level of objects (2) in each dispenser magazine (13) is detected during its displacement from the first dispenser magazine (13) to the last dispenser magazine (13) and/or from the last dispenser magazine (13) to the first dispenser magazine (13), and the actual stock level of objects (2) of each dispenser magazine (13) is transmitted to the computer system or to a control unit (63).

9. Method as claimed in one of claims 1 to 8, **characterised in that** the objects (2) fed into the dispenser magazines (13) are dispensed from the dispenser magazines (13) by means of the dispensing mechanisms (21) based on orders onto a conveyor unit (3) disposed along the storage unit (4) or are conveyed in transport containers grouped into individual orders.

## Revendications

1. Procédé de préparation de biens empilables (2) dans des magasins de réserve (13) en forme de puits d'au moins une installation de stockage (4), et surveillance d'un stock réel de biens (2) dans les magasins de réserve (13) au moyen d'une installation de détection (30), dans lequel tout d'abord, les biens (2) sont empilés les uns au-dessus des autres selon le type dans les magasins de réserve en forme de puits (13) disposés en une rangée les uns derrière les autres et sont délivrés ensuite individuellement par des dispositifs d'émission (21) disposés à l'extrémité inférieure (20) de chaque magasin de réserve (13), commandés par un système de calcul, **caractérisé en ce que** l'installation de détection (30) est déplacée par un wagon de positionnement (32) au-dessus des magasins de réserve (13) dans la direction longitudinale de l'installation de stockage (4) et, pendant le mouvement de déplacement, une distance (41) est mesurée sans contact par l'installation de détection (30) dans un ou plusieurs magasins de réserve (13) entre le bien supérieur (2) le plus éloigné du dispositif d'émission (21) et une limite de niveau supérieur maximale (42) d'un magasin de réserve (13), et dans un ou plusieurs magasins de réserve (13), le stock réel de biens (2) est calculé en intégrant une mesure de biens (45) dans la direction de la pile, et **en ce que** d'une manière connue, au moins une commande comprenant un bien (2) est détectée d'une manière électronique par le système de calcul, à la suite de quoi, conformément à la commande, un stock de consigne requis en biens (2) est calculé dans un ou plusieurs magasins de réserve (13) dans le système de calcul, et ensuite le stock réel en biens (2) dans un ou plusieurs magasins de réserve (13) est comparé avec le stock de consigne, et **en ce qu'**une indication de besoin pour un opérateur en vue du remplissage d'un ou de plusieurs magasins de réserve (13) est émise au système de calcul et/ou à une unité de commande (63) lorsque dans un des magasins de réserve (13), le stock réel en biens (2) est inférieur et/ou sera inférieur sous peu au stock de consigne des biens (2) requis pour la au moins une commande entrée.

2. Procédé de préparation de biens empilables (2) dans des magasins de réserve (13) en forme de puits d'au moins une installation de stockage (4) et surveillance du stock réel en biens (2) dans les magasins de réserve (13) au moyen d'une installation de détection (30), dans lequel tout d'abord, les biens (2) sont empilés les uns au-dessus des autres selon le type dans des magasins de réserve en forme de puits (13), disposés en une rangée les uns derrière les autres, et sont distribués ensuite individuellement par des dispositifs d'émission (21) disposés à l'extrémité inférieure (20) de chaque magasin de réserve (13), commandés par un système de commande, **caractérisé en ce que** l'installation de détection (30) est déplacée par un wagonnet de positionnement (32) au-dessus des magasins de réserve (13) dans la direction longitudinale de l'installation de stockage (4) et, pendant le mouvement de déplacement, une distance (41) entre le bien supérieur (2) le plus éloigné du dispositif d'émission (2) et une limite de niveau supérieur maximale (42) d'un magasin de réserve (13) est mesurée sans contact par l'installation de détection (30) dans un ou plusieurs magasins de réserve (13), et dans un ou plusieurs magasins de réserve (13), le stock réel en biens (2), en intégrant une mesure de biens (45) dans la direction de la pile, est calculé, et **en ce que** par le système de calcul, une quantité de vente prévue d'au moins un bien (2) est détectée d'une manière électronique à l'intérieur d'une fenêtre de temps réglée, à la suite de quoi, conformément à la quantité de vente prévue, un stock de consigne requis en biens (2) est calculé dans un ou plusieurs magasins de réserve (13) par le système de calcul, et ensuite le stock réel en biens (2) dans un ou plusieurs magasins de réserve (13) est comparé avec le stock de consigne, et **en ce qu'**une indication de besoin pour un opérateur, pour le remplissage d'un ou de plusieurs magasins de réserve (13) est émise au système de calcul et/ou à une unité de commande (63) lorsque dans un des magasins de réserve (13), le stock réel en biens (2) est inférieur et/ou sera inférieur sous peu au stock de consigne des produits (2) requis pour la quantité de vente prévue.

3. Procédé selon la revendication 1 ou 2, **caractérisé en ce que** l'indication de besoin est émise d'une manière optique et/ou acoustique et/ou comme information parlée.

4. Procédé selon la revendication 1 ou 2, **caractérisé en ce que** le wagonnet de positionnement (32) est déplacé le long d'une voie de guidage (36) s'étendant dans la direction longitudinale de l'installation de stockage (4) et disposé d'une manière avoisinante aux extrémités supérieures (38) des magasins de réserve (13), entre les magasins de réserve (13) qui se font suite dans la direction de déplacement (46) du wagonnet de positionnement (32).

5. Procédé selon l'une des revendications 1 à 4, **caractérisé en ce que** le stock réel en biens (2) est déterminé dans le ou les magasins de réserve (13) dans lesquels sont conservés les biens (2) mis à disposition pour la ou les commandes ou la quantité de vente prévue, et **en ce que** la valeur de distance détectée du ou des magasins de réserve (13) concernés est transmise au système de commande ou à une unité de commande (63).

6. Procédé selon l'une des revendications 1 à 4, **caractérisé en ce que** le wagonnet de positionnement (32) se déplace au ou aux magasins de réserve (13) dans lequel ou dans lesquels les biens (2) mis à disposition pour la ou les commandes ou la quantité de vente prévue sont conservés, et **en ce que** le stock réel en biens (2) du ou des magasins de réserve concernés (13) est transmis au système de calcul ou à une unité de commande (63).

7. Procédé selon l'une des revendications 1 à 4, **caractérisé en ce que** le wagonnet de positionnement (32) est déplacé continuellement selon un mouvement alternatif entre les premier et dernier magasins de réserve (13) dans la direction de déplacement (46) de celui-ci, et pendant son mouvement de déplacement du premier magasin de réserve (13) au dernier magasin de réserve (13) et/ou du dernier magasin de réserve (13) au premier magasin de réserve (13), la distance (41) est détectée pour déterminer le stock réel en biens (2) dans chaque magasin de réserve (13), et le stock réel en biens (2) est transmis de chaque magasin de réserve (13) au système de calcul ou à une unité de commande (63).

8. Procédé selon l'une des revendications 1 à 4, **caractérisé en ce que** le wagonnet de positionnement (32) est déplacé selon un mouvement alternatif, commandé selon des intervalles de temps, entre les premier et dernier magasins de réserve (13) dans la direction de déplacement (46) de celui-ci et, pendant son mouvement de déplacement du premier magasin de réserve (13) au dernier magasin de réserve (13) et/ou du dernier magasin de réserve (13) au premier magasin de réserve (13), la distance (41) pour déterminer le stock réel en biens (2) est détectée dans chaque magasin de réserve (13), et le stock réel en biens (2) de chaque magasin de réserve (13) est transmis au système de calcul ou à une unité de commande (63).

9. Procédé selon l'une des revendications 1 à 8, **caractérisé en ce que** les biens (2) mis à disposition dans les magasins de réserve (13) sont posés par les dispositifs d'émission (21) des magasins de réserve (13), en fonction des commandes, sur une installation de convoyage (3) disposée le long de l'installation de stockage (4) ou bien sont transportés, en étant réunis en commandes individuelles, dans des contenants de transport.
